# EUROPEAN PATENT APPLICATION

(11) **EP 4 654 325 A1**
(43) Date of publication of application: **26.11.2025**
(21) Application number: 24178987.4
(22) Date of filing: 30.05.2024
(51) Int. Cl.: H01M 10/42, H01M 10/0587, H01M 50/107, H01M 50/143, H01M 50/147, H01M 50/152, H01M 50/342, H01M 50/574, H01M 50/578

(54) **CYLINDRICAL LITHIUM BATTERY CAP, AND LITHIUM BATTERY WITH CAP AND BATTERY PRODUCTION PROCESS**

(30) Priority: 20.05.2024 CN 202421098873 U; 20.05.2024 CN 202421099127 U
(71) Applicant: Chen, Chao, Shenzhen (CN)
(72) Inventor: CHEN, Chao, Shenzhen (CN)
(74) Representative: Metida

(57) **Abstract**

The invention aims to provide a cylindrical lithium battery cap with a built-in BMS board and a cylindrical lithium battery with the cap, which have the characteristics of compact and reasonable structure, convenient manufacturing and miniaturization, and can minimize the effect of the need to install the BMS board resulting in smaller cell capacity.

## Description

### Technical Field

The invention relates to the technical field of a cylindrical lithium battery, in particular to a cylindrical lithium battery cap with a built-in BMS board and a cylindrical lithium battery with the cap.

### Background Art

Cylindrical lithium battery is a common secondary battery, also known as lithium-ion battery. The cylindrical lithium battery composed of a cylindrical container, which contains a positive electrode, a negative electrode and electrolyte and other components. The battery cap is the component structure of the cylindrical lithium battery for sealing the upper part of the cylindrical lithium battery.

At present, there are cylindrical lithium batteries without BMS system and with BMS system on the market. Battery Management System (BMS) is an important part of modern battery technology and particularly plays a key role in electric vehicles and renewable energy storage systems. The main function of BMS is to ensure that the battery pack improves energy efficiency in a safe and stable manner.

There are size standards for the external dimensions of the lithium batteries such as AA battery and AAA battery. Therefore, if the cylindrical lithium battery is necessarily provided with BMS, it is necessary to reduce the cell size of the lithium battery, make an independent sealed battery cell and an independent BMS and then put the two into the battery case for electrical connection. In the cylindrical lithium battery with the BMS, the BMS is separated from the battery cell, resulting in great reduction in battery cell size, reduction in battery capacity, increase in the overall weight of the battery, high manufacturing cost, complex installation during production and processing, and other problems, limiting the scope and performance of battery application.

Therefore, how to make a rechargeable cylindrical lithium battery with a miniaturized built-in BMS board has become a technical problem in the field.

The applicant has applied for CN202310996046.2 invention patent titled "Cylindrical lithium battery cap with built-in BMS board", which comprises a steel shell, a cap with a BMS board connected to the inner side of the steel shell, a plastic support, the lower end of which is connected to the interior of the cap with the BMS board, a positive conductive metal cap, the lower end of which is connected to the interior of the plastic support, and a PCBA plate connected to the outer edge of the upper end of the positive conductive metal cap; the middle of the lower end of the PCBA board extends to the middle of the positive conductive metal cap, and the PCBA board comprises a BMS chip, a power management chip, a battery control chip, a display chip and a multi-circuit protector; a negative metal ring is connected to the outer edge of the upper end of the PCBA board; the entire circle of the opening of the steel shell is rolled inwards, and is in contact with the negative metal ring to conduct the negative electrode; a positive plastic cap is connected to the inner wall of the negative metal ring, a damping exists between the positive plastic cap and the negative metal ring, an opening structure is adopted in the middle of the positive plastic cap and fits with an external positive metal column. The invention solves the problem of the cap structure for the existing cylindrical lithium battery, and the BMS used for monitoring is processed internally to simplify the installation step to meet the use demand.

However, in the above proposal, the structure of the entire cap is still not the most compact due to the structural arrangement of the plastic bracket and the existence of the negative metal ring and the positive plastic cap, and there is still room for improvement.

### Summary of the Invention

The first purpose of the invention is to provide a cylindrical lithium battery cap with a built-in BMS board, which has the advantages of compact and reasonable structure, convenient manufacturing and favor of making a miniaturized cylindrical lithium battery with the built-in BMS board, and can minimize the effect of the need to install the BMS board resulting in smaller cell capacity.

A cylindrical lithium battery cap with a built-in BMS board comprises a cap mechanism, which comprises a cap shell, a positive conductive metal cap, a BMS component and a plastic support for protecting the BMS component;
The cap shell is used for connection to the inner side of a steel shell for a cylindrical lithium battery;
The positive conductive metal cap is located in the cap shell and is used for electrical connection with a positive electrode of a lithium battery cell;
The BMS component comprises a BMS main board part and a positive insulating cap part, a plurality of electronic components forming a BMS management system are arranged on the BMS main board part, the positive insulating cap part is arranged towards the positive side of the cylindrical lithium battery and forms a sealed connection with the cap shell and the steel shell of the cylindrical lithium battery, and the BMS main board part and the positive insulating cap part are integrally formed or split;
The positive conductive metal cap comprises a main part with a groove and a flanged part integrated with the main part; the electronic component on the BMS main board part is arranged towards the groove;
When the plastic support is used, the BMS main board part and the plastic support are located between the positive conductive metal cap and the positive insulating cap part, and the positive insulating cap part is butted with the flanged part;
When the metal conducting ring is used, the BMS main board part and the metal conducting ring are located between the positive conductive metal cap and the positive insulating cap part, and the metal conducting ring is butted between the flanged part and the BMS main board part.

Preferably, an embossed part is arranged on one side of the flanged part facing the positive insulating cap part.

Preferably, the positive conductive metal cap is tightly connected with the positive insulating cap part and the cap shell.

Preferably, the positive conductive metal cap is tightly connected with the plastic support and the cap shell.

Preferably, the positive conductive metal cap is provided with an explosion-proof pressure relief part in the central position towards the positive side of the cell, and the explosion-proof pressure relief part is thinner than that of the other positions of the positive conductive metal cap, and prevents the battery from exploding caused by too large internal pressure when the internal pressure of the cell exceeds the threshold.

Preferably, the BMS main board part and the positive insulating cap part are provided with slotted holes interconnected with external air, and the explosion-proof pressure relief part is connected with the slotted holes when the explosion-proof pressure relief part explodes.

By using the above technical proposal, the structural arrangement of the plastic support is improved, and the negative metal ring is eliminated, making the structure of the entire cap more compact and further improving the capacity of the battery cell. In addition, the main board part and the positive insulating cap part are integrally formed or split, and the arrangement form is more flexible; when the two are integrally formed, the volume of the cap is further reduced; when the two are split, the positive insulating cap part can also be thinner than the positive plastic cap in the prior art, and the fit with the main board part is closer.

The explosion-proof pressure relief part is arranged on the positive conductive metal cap, and is broken preferentially to prevent explosion caused by too large internal pressure as the metal of the explosion-proof pressure relief part is thin when the internal pressure of the cell is abnormally large and exceeds the threshold. One or more slotted holes are arranged on the BMS main board and are straight to the outside, and the high-pressure gas is discharged from the holes after the explosion-proof pressure relief part is broken.

Therefore, the cap of the invention has the advantages of more reasonable structure, fewer parts, lower production cost, simpler manufacture and more compact structure, so that the lithium battery with the cap has larger battery capacity.

The second purpose of the invention is to provide a cylindrical lithium battery, in which the cylindrical lithium battery cap with the BMS board is arranged, and the cylindrical lithium battery has the advantages of the miniaturized cylindrical lithium battery with the built-in BMS board, minimizes the influence of the cell capacity reduction caused by the need to install the BMS board, and has simple and compact structure, good sealing property, and high practicability, safety and reliability.

A cylindrical lithium battery comprises a battery insulating case, a steel shell arranged inside the battery insulating case and a cell arranged inside the steel shell, wherein a negative electrode of the cell is electrically connected with the steel shell, the cylindrical lithium battery cap with the built-in BMS board is arranged in the steel shell, the positive electrode of the cell is electrically connected with the positive conductive metal cap, and a circle of solder part is arranged on one side of the positive insulating cap part towards a positive conductive column of the battery, and is electrically connected with the steel shell.

Preferably, the main board part and the positive insulating cap part are provided with phase conducting formation holes used in the formation of the lithium battery to enable the lithium battery to be charged and discharged to activate the lithium battery.

By using the above technical proposal and using a more reasonable cap structure, the cap can be used for AA and AAA 1.5V lithium batteries and other miniature lithium batteries with different fixed voltages, the solder part is electrically connected to the steel shell, and the positive conductive metal cap is electrically connected to the positive electrode of the cell, so that an internal circuit cycle is formed to output the voltage 3.6V of the internal cell as 1.2V, 1.5V, 9V or other different voltages, and the obtained lithium battery has higher sealing property, more secure explosion-proof effect, and larger battery capacity than the original cylindrical lithium battery with the BMS board.

The third purpose of the invention is to provide a cylindrical lithium battery production process for manufacturing the cylindrical lithium battery in a simple and convenient way.

A cylindrical lithium battery production process for producing the cylindrical lithium battery includes a cap making process, a battery cell manufacturing process and a finished product assembly and manufacturing process, wherein the cap making process includes Step 1: Mount a plurality of electronic components onto the BMS main board part to finish the mounting process of the BMS main board part; Step 2: Spray waterproof coating on the plastic support, then spray glue, air-dry, and perform soft treatment for the plastic support; Step 3: Put the positive conductive metal cap into the plastic support with glue air-dried, and then install the BMS component to complete the manufacturing of the lithium battery cap with the built-in BMS component; the battery cell manufacturing process includes Step 1: Batching; Step 2: Coating; Step 3: Cell production; Step 4: Winding.
The finished product assembly and manufacturing process includes Step 1: Put the cell in the steel shell, and laser-weld the negative electrode of the cell to the inner bottom of the steel shell; Step 2: Roll a slot for the steel shell so that the cell is fixed in the steel shell and cannot fall out; Step 3: Laser-weld the positive electrode of the cell to the edge of the back of the positive conductive metal cap; Step 4: Bake the component with the cap welded to remove moisture and then inject electrolyte; Step 5: Seal, and make the entire circle of the opening of the steel shell rolled inwards to be extruded on the positive insulating cap part of the solder part to conduct the negative electrode; Step 6: Label a corresponding printing sleeve according to the appearance requirements of the customer, and print a code; Step 7: Put into a formation cabinet for formation and perform aging treatment; Step 8: Fully charge the rechargeable lithium batteries after aging, and then sort out the batteries with different capacities and voltages; Step 9: Pack in a special rechargeable lithium battery packing box for safe storage and transportation.

The process is simple and convenient to manufacture, and is convenient for low cost and mass production of the lithium battery in the invention.

### Brief Description of the Drawings

FIG. 1 is the section view of the cylindrical lithium battery (the battery insulating shell is omitted) with the cylindrical lithium battery cap with the built-in BMS board in the embodiment 1 of the invention.
FIG. 2 is the enlarged view of Part A for FIG. 1.
FIG. 3 is the split view 1 of the cylindrical lithium battery (the battery insulating shell is omitted) with the cylindrical lithium battery cap with the built-in BMS board in the embodiment 1 of the invention.
FIG. 4 is the split view 1 of the cylindrical lithium battery (the battery insulating shell is omitted) with the cylindrical lithium battery cap with the built-in BMS board in the embodiment 1 of the invention.
FIG. 5 is the section view of the cylindrical lithium battery (the battery insulating shell is omitted) with the cylindrical lithium battery cap with the built-in BMS board in the embodiment 2 of the invention.
FIG. 6 is the enlarged view of Part B for FIG. 5.
FIG. 7 is the split view 1 of the cylindrical lithium battery (the battery insulating shell is omitted) with the cylindrical lithium battery cap with the built-in BMS board in the embodiment 2 of the invention.
FIG. 8 is the split view 1 of the cylindrical lithium battery (the battery insulating shell is omitted) with the cylindrical lithium battery cap with the built-in BMS board in the embodiment 2 of the invention.

1. Cap mechanism; 11. Cap shell; 12. Positive conductive metal cap; 121. Main part; 122. Flanged part; 1221. Embossed part; 123. Explosion-proof pressure relief part; 13. BMS component; 131. BMS main board part; 132. Positive insulating cap part; 1321. Solder part; 133. Electronic component; 134. Slotted hole; 14. Plastic support; 21. Steel shell; 22. Cell; 221. Positive electrode of cell; 222. Negative electrode of cell.

### Detailed Description of the Drawings

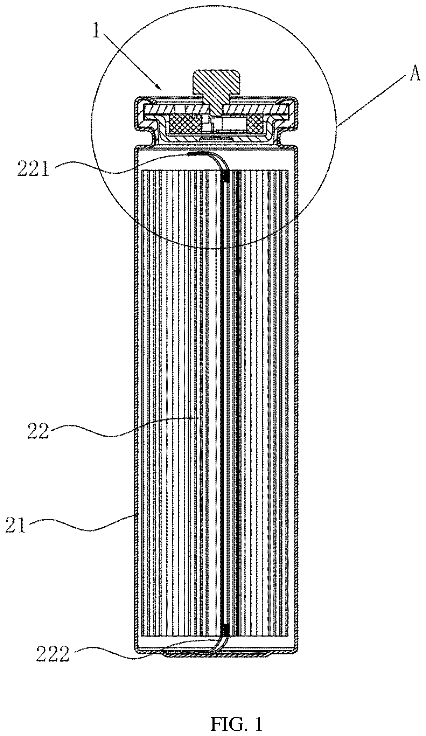

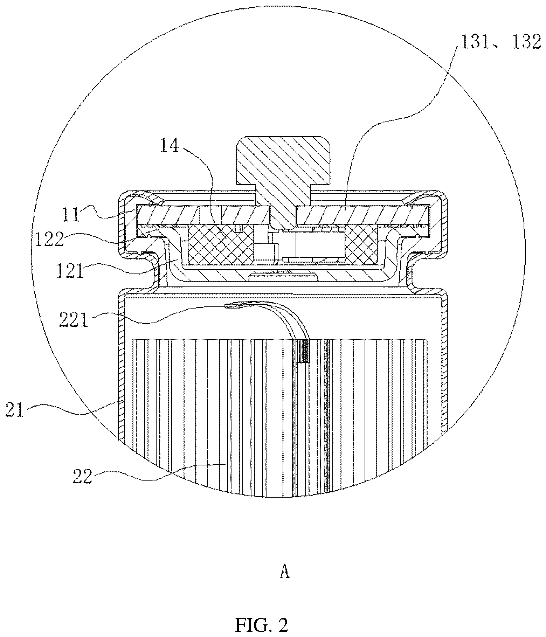

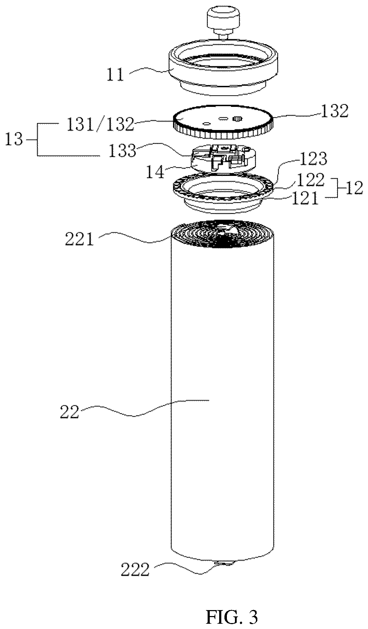

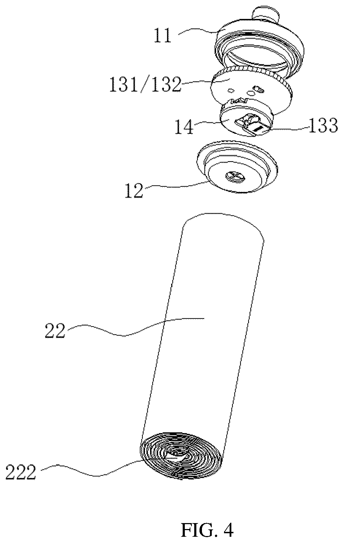

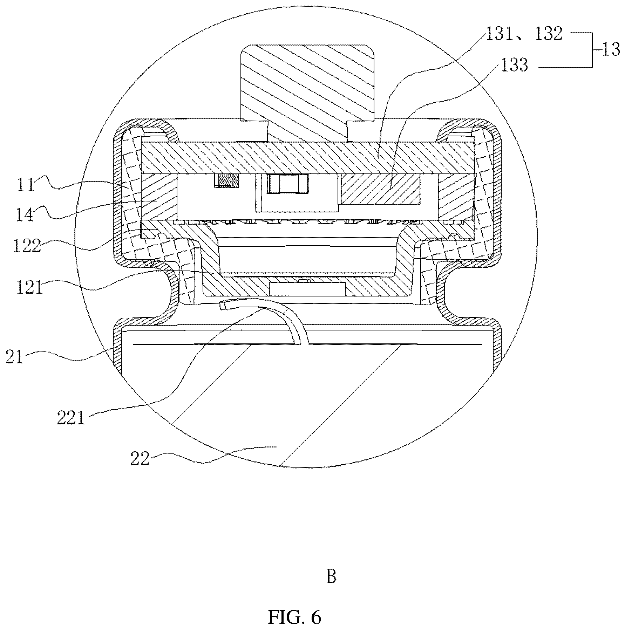

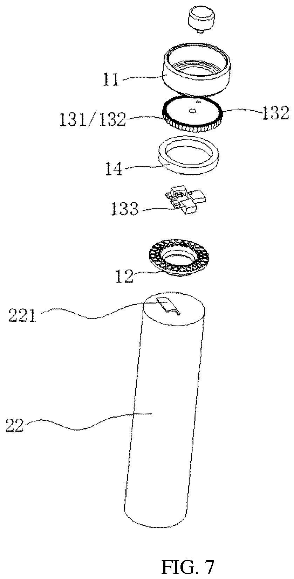

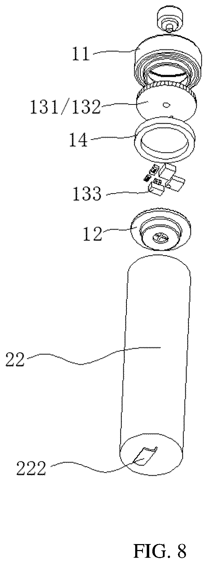

The invention is further described below in combination with FIG. 1 to FIG. 8.

### Embodiment 1

As shown in FIG. 1 to FIG. 4, a cylindrical lithium battery cap with a built-in BMS board, particularly suitable for AA batteries, comprises a cap mechanism 1, which comprises a cap shell 11, a positive conductive metal cap 12, a BMS component 13 and a plastic support 14 for protecting the BMS component 13;
The cap shell 11 is used for connection to the inner side of a steel shell 21 for a cylindrical lithium battery;
The positive conductive metal cap 12 is located in the cap shell 11 and is used for electrical connection with a positive electrode 221 of a lithium battery cell, and comprises a main part 121 with a groove and a flanged part 122 integrated with the main part 121; the positive conductive metal cap 12 is provided with an explosion-proof pressure relief part 123 in the central position towards the positive side of the cell, and the explosion-proof pressure relief part 123 is thinner than that of the other positions of the positive conductive metal cap 12, and prevents the battery from exploding caused by too large internal pressure when the internal pressure of the cell 22 exceeds the threshold;
The BMS component 13 comprises a BMS main board part 131 and a positive insulating cap part 132, a plurality of electronic components 133 forming a BMS management system are arranged on the BMS main board part 131, the positive insulating cap part 132 is arranged towards the positive side of the cylindrical lithium battery and forms a sealed connection with the cap shell 11 and the steel shell 21 of the cylindrical lithium battery, and the BMS main board part and the positive insulating cap part 132 are integrally formed or split;
The electronic components 133 and the plastic support 14 on the BMS main board part 131 are arranged in the groove of the main part 121; the BMS main board part 131 and the positive insulating cap part 132 are provided with slotted holes interconnected with external air, and the explosion-proof pressure relief part is connected with the slotted holes when the explosion-proof pressure relief part explodes, and high-pressure gas is discharged from the slotted holes 134 (the slotted holes 134 herein are actually the formation holes of the lithium battery) from the inside of the cell 22 to the positive conductive metal cap 12; The positive insulating cap part 132 is located above the positive conductive metal cap 12 and is butted with the Flanged part 122, seal fit is adopted between the positive insulating cap part 132 and the cap shell 11, an embossed part 1221 is arranged on one side of the Flanged part 122 facing the positive insulating cap part 132, the raised surface of the embossed part 1221 is butted with the positive insulating cap part 132, and the embossed part 1221 makes the contact between the positive conductive metal cap 12 and the BMS component 13 more stable, ensuring the current conducting stability;
The BMS main board part 131 and the plastic support 14 are located between the positive conductive metal cap 12 and the positive insulating cap 132. The positive insulating cap part 132 is located above the positive conductive metal cap 12 and faces the positive side of the battery, seal fit is adopted between the positive insulating cap part 132 and the cap shell 11, and the BMS component 13 is electrically connected with the steel shell. More specifically, a circle of solder part 1321 is arranged on one side of the positive insulating cap part 132 towards a positive conductive column of the battery, and is electrically connected with the steel shell 21.
The positive conductive metal cap 12 is tightly connected with the positive insulating cap part 132 and the cap shell 11.

### Embodiment 2

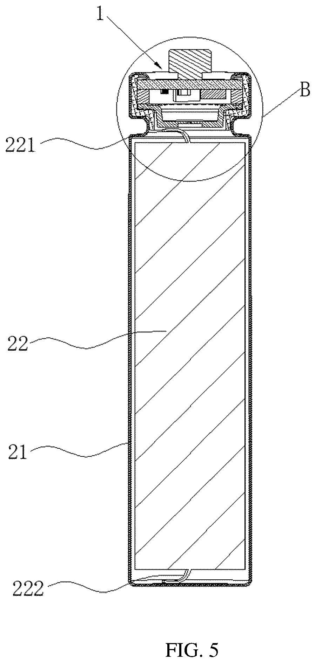

As shown in FIG. 5 to FIG. 8, a cylindrical lithium battery cap with a built-in BMS board, particularly suitable for AAA batteries, comprises a cap mechanism 1, which comprises a cap shell 11, a positive conductive metal cap 12, a BMS component 13 and a metal conducting ring 15 for protecting the BMS component 1 (the positive conductive metal cap 12 is preferred to be composed of soft aluminum materials, which makes the positive conductive metal cap 12 is soft, and the space inside AAA lithium battery is too small, and it is necessary to add a circle of support to raise the space and increase the placement space of electronic components, and ensure that the conducting function is normal, so it is necessary to arrange the positive metal conductive ring 14);
The cap shell 11 is used for connection to the inner side of the steel shell 11 for the cylindrical lithium battery;
The positive conductive metal cap 12 is located in the cap shell 11 and is used for electrical connection with a positive electrode 221 of a lithium battery cell; the positive conductive metal cap 12 comprises a main part 121 with a groove and a flanged part 122 integrated with the main part 121; the positive conductive metal cap 12 is provided with an explosion-proof pressure relief part 123 in the central position towards the positive side of the cell, and the explosion-proof pressure relief part 123 is thinner than that of the other positions of the positive conductive metal cap 12, and prevents the battery from exploding caused by too large internal pressure when the internal pressure of the cell 22 exceeds the threshold;
The BMS component 13 comprises a BMS main board part and a positive insulating cap part 132, a plurality of electronic components 133 forming a BMS management system are arranged on the BMS main board part 131, the positive insulating cap part 132 is arranged towards the positive side of the cylindrical lithium battery and forms a sealed connection with the cap shell 11 and the steel shell 21 of the cylindrical lithium battery, and the BMS main board part and the positive insulating cap part 132 are integrally formed or split;
The electronic components 133 on the BMS main board part 131 is arranged towards the groove; the metal conducting ring 15 is butted between the flanged part 122 and the positive insulating cap part 132; the BMS main board part 131 and the positive insulating cap part 132 are provided with slotted holes 134 interconnected with external air, the explosion-proof pressure relief part 123 is connected with the slotted holes 134 when the explosion-proof pressure relief part 123 explodes, and the high-pressure gas is discharged from the slotted holes 134 from the inside of the cell 22 to the positive conductive metal cap 12;
The positive insulating cap part 132 is located above the positive conductive metal cap part 12 and is butted with the flanged part 122, seal fit is adopted between the positive insulating cap part 132 and the cap shell 11, the embossed part 1221 is arranged on one side of the flanged part 122 facing the positive insulating cap part 132, the embossed surface of the embossed part 1221 is connected with the metal conductive ring 14, and the embossed part 1221 makes the contact between the positive conducting metal cap 12 and the metal conducting ring 15 more stable, ensuring the stability of the current conduction of the BMS module 13;
The BMS main board part 131 and the metal conducting ring 15 are located between the positive conductive metal cap 12 and the positive insulating cap part 132. The positive insulating cap part 132 is located above the positive conductive metal cap 12 and faces the positive electrode of the battery, seal fit is adopted between the positive insulating cap part 132 and the cap shell 11, and the BMS component is electrically connected with the steel shell 21. More specifically, a circle of solder part 1321 is arranged on one side of the positive insulating cap part 132 towards a positive conductive column of the battery, and is electrically connected with the steel shell 21.
The positive conductive metal cap 12 is tightly connected with the metal conducting ring 15 and the cap shell 11.

### Embodiment 3

A cylindrical lithium battery comprises a battery insulating case, a steel shell 21 arranged inside the battery insulating case and a cell 22 arranged inside the steel shell 21, wherein a negative electrode 222 of the cell is electrically connected with the steel shell 21 so that the entire steel shell 21 becomes the negative electrode of the cylindrical lithium battery, the cylindrical lithium battery cap with the built-in BMS board in the embodiment 1 is arranged in the steel shell 21, the positive electrode 221 of the cell is electrically connected with the positive conductive metal cap 12, and a circle of solder part 1321 is arranged on one side of the positive insulating cap part 132 towards a positive conductive column of the battery, and is electrically connected with the steel shell 21.

It should be noted here that the steel shell is a negative electrode, an inward rolled ring of the steel shell is arranged on one side of the steel shell towards the positive electrode of the battery and is press-fitted with the solder part, the solder part has a certain thickness, and tin is a soft metal, and part of the inward rolled ring of the steel shell is embedded in the solder part after press fitting, realizing stable contact with the steel shell, and meeting the overcurrent requirement.

The cell 22 has voltage of 3V to 4.2V, less energy at low voltage and 4.2V after fully charged; the solder part is electrically connected with the steel shell 21, and the positive conductive metal cap 12 is electrically connected with the positive electrode of the cell 22, so that an internal circuit cycle is formed to output the voltage 3.6V of the internal cell as 1.2V, 1.5V, 9V or other different voltages.

### Embodiment 4

A cylindrical lithium battery comprises a battery insulating case, a steel shell 21 arranged inside the battery insulating case and a cell 22 arranged inside the steel shell 21, wherein a negative electrode 222 of the cell is electrically connected with the steel shell 21, the cylindrical lithium battery cap with the built-in BMS board described in the embodiment 2 is arranged in the steel shell 21, and a positive electrode 221 is electrically connected with a positive conductive metal cap 12.

### Embodiment 5

A cylindrical lithium battery production process for producing the cylindrical lithium battery in the embodiment 3 or 4 includes a cap making process, a battery cell manufacturing process and a finished product assembly and manufacturing process, wherein
the cap making process includes Step 1: Mount a plurality of electronic components onto the BMS main board part to finish the mounting process of the BMS main board part; Step 2: Spray waterproof coating on the plastic support, then spray glue, air-dry, and perform soft treatment for the plastic support; Step 3: Put the positive conductive metal cap into the plastic support with glue air-dried, and then install the BMS component to complete the manufacturing of the lithium battery cap with the built-in BMS component; A battery cell manufacturing process, includes Step 1: Batching; Step 2: Coating; Step 3: Cell production; Step 4: Winding;
A finished product assembly and manufacturing process includes Step 1: Put the cell in the steel shell, and laser-weld the negative electrode of the cell to the inner bottom of the steel shell; Step 2: Roll a slot for the steel shell so that the cell is fixed in the steel shell and cannot fall out; Step 3: Laser-weld the positive electrode of the cell to the edge of the back of the positive conductive metal cap; Step 4: Bake the component with the cap welded to remove moisture and then inject electrolyte; Step 5: Seal, and make the entire circle of the opening of the steel shell rolled inwards to be extruded on the positive insulating cap part of the solder partto conduct the negative electrode; Step 6: Label a corresponding printing sleeve according to the appearance requirements of the customer, and print a code; Step 7: Put into a formation cabinet for formation and perform aging treatment; Step 8: Fully charge the rechargeable lithium batteries after aging, and then sort out the batteries with different capacities and voltages; Step 9: Pack in a special rechargeable lithium battery packing box for safe storage and transportation.

The process is simple and convenient to manufacture, and is convenient for low cost and mass production of the lithium battery in the invention.

The above embodiments are only preferred embodiments of the invention and cannot be used to limit the scope of protection of the invention. Any immaterial changes and substitutions made by the technicians in the field on the basis of the invention fall within the scope of protection of the invention.

## Claims

1. A cylindrical lithium battery cap with a built-in BMS board, comprising a cap mechanism (1), and **characterized in that** the cap mechanism (1) is composed of a cap shell (11), a positive conductive metal cap (12), a BMS component (13) and a plastic support (14) for protecting the BMS component (13) or a metallic conducting ring (15);
The cap shell (11) is used for connection to the inner side of a steel shell (21) for a cylindrical lithium battery;
The positive conductive metal cap (12) is located in the cap shell (11) and is used for electrical connection with a positive electrode of a lithium battery cell (22);
The BMS component (13) consists of a BMS main board part (131), a positive insulating cap part (132) and a plurality of electronic components (133) arranged on the BMS main board part (131) and forming a BMS management system, the positive insulating cap part (132) is arranged towards the positive side of the cylindrical lithium battery and forms a sealed connection with the cap shell (11) and the steel shell (21) of the cylindrical lithium battery, and the BMS main board part (131) and the positive insulating cap part (132) are integrally formed or split;
The positive insulating cap part (132) is located above the positive conductive metal cap (12) and faces the positive side of the battery, seal fit is adopted between the positive insulating cap part (132) and the cap shell (11), and the BMS component (13) is electrically connected with the steel shell;
The positive conductive metal cap (12) comprises a main part (121) with a groove and a flanged part (122) integrated with the main part (121); the electronic component (133) on the BMS main board part (131) is arranged towards the groove;
When the plastic support (14) is used, the BMS main board part (131) and the plastic support (14) are located between the positive conductive metal cap (12) and the positive insulating cap part (132), and the positive insulating cap part (132) is butted with the flanged part (122);
When the metal conducting ring (15) is used, the BMS main board part (131) and the metal conducting ring (15) are located between the positive conductive metal cap (12) and the positive insulating cap part (132), and the metal conducting ring (15) is butted between the flanged part (122) and the BMS main board part (131).

2. The cylindrical lithium battery cap with the built-in BMS board according to claim 1, **characterized in that** an embossed part (1221) is arranged on one side of the flanged part (122) facing the positive insulating cap part (132).

3. The cylindrical lithium battery cap with the built-in BMS board according to claim 2, **characterized in that** the positive conductive metal cap (12) is tightly connected with the positive insulating cap part (132) and the cap shell (11).

4. The cylindrical lithium battery cap with the built-in BMS board according to claim 1, **characterized in that** the positive conductive metal cap (12) is tightly connected with the plastic support (14) and the cap shell (11).

5. The cylindrical lithium battery cap with the built-in BMS board according to claim 1, **characterized in that** the positive conductive metal cap (12) is provided with an explosion-proof pressure relief part (123) in the central position towards the positive side of the cell, and the explosion-proof pressure relief part (123) is thinner than that of the other positions of the positive conductive metal cap (12), and prevents the battery from exploding caused by too large internal pressure when the internal pressure of the cell (22) exceeds the threshold.

6. The cylindrical lithium battery cap with the built-in BMS board according to claim 1, **characterized in that** the BMS main board part (131) and the positive insulating cap part (132) are provided with slotted holes interconnected with external air, and the explosion-proof pressure relief part is connected with the slotted holes when the explosion-proof pressure relief part explodes.

7. A cylindrical lithium battery, comprising a battery insulating case, a steel shell (21) arranged inside the battery insulating case and a cell (22) arranged inside the steel shell (21), wherein a negative electrode (222) of the cell is electrically connected with the steel shell (21), and **characterized in that** the cylindrical lithium battery cap with the built-in BMS board according to any of claims 1-6 is arranged in the steel shell (21), the positive electrode (221) of the cell is electrically connected with the positive conductive metal cap (12), and a circle of solder part is arranged on one side of the positive insulating cap part (132) towards a positive conductive column of the battery, and is electrically connected with the steel shell (21).

8. The cylindrical lithium battery according to claim 8, **characterized in that** the main board part and the positive insulating cap part (132) are provided with phase conducting formation holes used in the formation of the lithium battery to enable the lithium battery to be charged and discharged to activate the lithium battery.

9. A cylindrical lithium battery production process, **characterized by** being used to produce the cylindrical lithium battery in claim 8 and consisting of a cap making process, a battery cell manufacturing process and a finished product assembly and manufacturing process, wherein
the cap making process includes Step 1: Mount a plurality of electronic components (133) onto the BMS main board part (131) to finish the mounting process of the BMS main board part (131); Step 2: Spray waterproof coating on the plastic support (14), then spray glue, air-dry, and perform soft treatment for the plastic support; Step 3: Put the positive conductive metal cap (12) into the plastic support (14) with glue air-dried, and then install the BMS component (13) to complete the manufacturing of the lithium battery cap with the built-in BMS component (13);
the battery cell manufacturing process includes Step 1: Batching; Step 2: Coating; Step 3: Cell production; Step 4: Winding; the finished product assembly and manufacturing process includes Step 1: Put the cell (22) in the steel shell (21), and laser-weld the negative electrode (222) of the cell to the inner bottom of the steel shell (21); Step 2: Roll a slot for the steel shell (21) so that the cell (22) is fixed in the steel shell (21) and cannot fall out; Step 3: Laser-weld the positive electrode (221) of the cell to the edge of the back of the positive conductive metal cap (12); Step 4: Bake the component with the cap welded to remove moisture and then inject electrolyte; Step 5: Seal, and make the entire circle of the opening of the steel shell (21) rolled inwards to be extruded on the positive insulating cap part (132) of the solder partto conduct the negative electrode; Step 6: Label a corresponding printing sleeve according to the appearance requirements of the customer, and print a code; Step 7: Put into a formation cabinet for formation and perform aging treatment; Step 8: Fully charge the rechargeable lithium batteries after aging, and then sort out the batteries with different capacities and voltages; Step 9: Pack in a special rechargeable lithium battery packing box for safe storage and transportation.
